# EUROPÄISCHE PATENTSCHRIFT

(11) **EP 0 591 874 B1**
(45) Veröffentlichungstag und Bekanntmachung des Hinweises auf die Patenterteilung: **24.01.1996**
(21) Anmeldenummer: 93115932.1
(22) Anmeldetag: 02.10.1993
(51) Int. Cl.: C09K 5/04

(54) **Perfluorisohexen als Kühl- und Isoliermedium**
Perfluoroisohexene as cooling and isolation medium
Isohexène perfluoré comme medium réfrigérant et isolant

(30) Priorität: 06.10.1992 DE 4233531
(43) Veröffentlichungstag der Anmeldung: 13.04.1994
(73) Patentinhaber: HOECHST AKTIENGESELLSCHAFT, D-65926 Frankfurt am Main (DE)
(72) Erfinder: Gisser, Alfons, D-84508 Burgkirchen (DE); Von Werner, Konrad, Dr., D-84518 Garching (DE); Naumann, Joachim, Dipl.-Ing., D-65779 Kelkheim (DE); Debrodt, Heiner, Dr., D-65760 Eschborn (DE); Becker, Wilfried, Dr., D-84524 Neuötting (DE)

(56) Entgegenhaltungen:
- US-A- 4 093 670
- WORLD PATENT INDEX (online Questel), Accession no. 77-32 028Y DERWENT PUBLICATIONS LTD., London & JP-A-52-38 662
- WORLD PATENTS INDEX (online Questel), ACCESSION NO. 79-16 678B DERWENT PUBLICATIONS LTD., London & JP-A-54-7 657

## Beschreibung

Die in den Bauelementen der Leistungselektronik in Form von Wärme auftretende Verlustleistung muß an ein Medium, einen sogenannten Wärmeträger, abgegeben werden, zum Beispiel beim Einsatz von Leistungshalbleitern für die Hochspannungs-Gleichstrom-Übertragung (HGÜ) oder für Bahnantriebe. Die einfachste Lösung ist die Isolierung und Kühlung mit Luft. Die Luft übernimmt als Isoliergas die Isolation der Hochspannung. Die Verlustwärme wird durch natürliche oder erzwungene Konvektion abgeführt. Durch den Einsatz eines getrennten Kühlsystems mit Kühldosen, durch die Wasser gepumpt wird, kann die Kühlwirkung gegenüber der reinen Luftkühlung erheblich erhöht werden. Wird eine höhere Durchschlagsspannung (ein Maß für die elektrische Festigkeit von Isolierflüssigkeiten) als die von Luft gefordert, kann ein Öl oder ein Gas mit höherer Durchschlagsspannung anstelle von Luft eingesetzt werden. Den genannten Kühlarten ist gemeinsam, daß die Abführung der Verlustwärme durch einphasige Konvektion, das heißt ohne Veränderung des Aggregatzustandes des Kühlmittels erfolgt. Wird eine zweiphasige Kühlung (Prinzip der Verdampfungskühlung) - auch als "Siedekühlung" bezeichnet - angewendet, kann die Leistungsfähigkeit des Kühlsystems wesentlich gesteigert werden. Entweder liegen die wärmeerzeugenden Bauelemente direkt in der siedenden Flüssigkeit oder die Flüssigkeit siedet in hohlen Kühldosen (Bad- beziehungsweise Dosensiedekühlung). Zwei weitere Vorteile der Siedekühltechnik gegenüber der reinen Flüssigkeitskühlung bestehen darin, daß erstens eine Pumpe für die Umwälzung des Kühlmediums nicht erforderlich ist, und daß zweitens durch natürliche Konvektion lokale Überhitzungen vermieden werden.

Eine spezielle Anwendung der Siedekühlung ohne Hochspannungsisolation ist das Wärmerohr (Heat Pipe), das die Wärmeenergie, zum Beispiel zwischen zwei Gasströmen, transportiert. Es besteht aus einem Metallrohr, in dem sich poröses, kapillares Material oder gebogene Drahtgaze befindet. In dieses vorher evakuierte Rohr wird das Kühlmedium eingefüllt und die Enden vakuumdicht verschlossen. Wird an einem Rohrende Wärme zugeführt, verdampft ein Teil der dort befindlichen Flüssigkeit und kondensiert am kühleren mit dem Kühlkörper versehenen Rohrende. Das kondensierte Kühlmedium wird von der Rohrfüllung aufgenommen und aufgrund der Kapillarwirkung dieses Materials wie in einem Docht dem erwärmten Rohrende wieder zugeführt, so daß sich ein ständiger, geschlossener Kreislauf ergibt.

Als Siedekühlflüssigkeiten können auch flüssige Halogenkohlenwasserstoffe verwendet werden. Aus dieser Gruppe hat sich 1,1,2-Trichlor-1,2,2-trifluorethan (Kurzbezeichnung FCKW 113) wegen seiner guten thermischen Stabilität, seiner Unbrennbarkeit, seiner geringen Viskosität, wegen seiner relativ hohen Verdampfungswärme sowie wegen seiner günstigen elektrophysikalischen und physiologischen Eigenschaften als kostengünstige Siedekühlflüssigkeit besonders bewährt.

FCKW 113 gehört allerdings zu den Chlorfluorkohlenwasserstoffen, die mit dem Ozon in der Stratosphäre unter Bildung von Chloroxid und Sauerstoff reagieren und somit zu dem Abbau dieser UV-Strahlen absorbierenden Schicht beitragen können. Aus diesem Grunde darf FCKW 113 in Zukunft nicht mehr produziert und angewendet werden. Es besteht daher der dringende Bedarf nach einem Kühl- und Isoliermittel, das FCKW 113 ersetzen kann.

An ein solches FCKW 113-Substitut sollten folgende Anforderungen gestellt werden:
1.Siedepunkt beziehungsweise -bereich deutlich unterhalb, kritische Temperatur deutlich oberhalb der maximal zulässigen Kühltemperatur, zum Beispiel bei Siedekühlung von Bahnantrieben maximal 70 °C.
2. Erstarrungspunkt deutlich unterhalb der niedrigsten Kühltemperatur, zum Beispiel bei Siedekühlung von Bahnantrieben in Gegenden mit strengen Wintern maximal -40 °C.
3. Möglichst hohe Verdampfungswärme im Siedebereich zur Reduzierung des Massenstromes, weil andernfalls Engpässe bei kleinen Leitungsquerschnitten entstehen können.
4. Möglichst hohe spezifische Wärme, weil dadurch die Wärmespeicherfähigkeit verbessert wird.
5. Hohe Wärmeleitfähigkeit, niedrige Viskosität und Oberflächenspannung verbessern die Wärmeübertragung bei der Kondensation. Viskosität und Oberflächenspannung bestimmen die Filmdicke der Kondensatschicht an kalten Oberflächen. Je viskoser die Kühlflüssigkeit und je höher deren Oberflächenspannung ist, um so dicker ist die Kondensatschicht.
6. Gute dielektrische Eigenschaften, das heißt niedrige Dielektrizitätszahl, hoher spezifischer elektrischer Durchgangswiderstand, niedriger dielektrischer Verlustfaktor.
7.Hohe Durchschlagsspannung (> 20 kV bei Siedekühlung von Bahnantrieben, > 50 kV/cm bei Transformatorenkühlung), gemessen bei Raumtemperatur.
8. Gute thermische Stabilität, gute Stabilität bei Spannungsüberschlägen.
9. Inertes Verhalten gegenüber Werkstoffen.
10. Günstige physiologische Eigenschaften.
11. Hoher Reinheitsgrad, frei von Verunreinigungen.
12.Geringer Gehalt an nicht kondensierbaren Gasen (< 1000 ppm, v/v), weil solche gelösten Gase den Wärmeübergang verschlechtern.
13. Gute Verfügbarkeit und wirtschaftliches Herstellungsverfahren, damit die Lieferung zu akzeptablen Preisen sichergestellt ist.
14. Aus Sicherheitsgründen möglichst unbrennbar.
15. Aus ökologischen Gründen möglichst umweltverträglich.

In der Veröffentlichung "Two-Phase Cooling Evolution of High Power Semiconductors" von T. Jomard et al., EPE Firenze, 1991 (2), Seiten 491 bis 496 werden verschiedene FCKW 113-Substitute für die Siedekühlung von Leistungshalbleitern vorgestellt. Es handelt sich hier um Isomere des Perfluorhexans und um perfluorierte cyclische Alkane. Sie verhalten sich nach Meinung der Autoren genauso wie FCKW 113, zum Teil sogar besser. Jedoch ist ihre thermische Leistungsfähigkeit etwas geringer als die von FCKW 113.

Der vorliegenden Erfindung liegt die Aufgabe zugrunde, eine Kühl- und Isolierflüssigkeit für ein- und zweiphasige Konvektion zu finden, die so beschaffen ist, daß ihre thermodynamischen und elektrophysikalischen Eigenschaften denen von FCKW 113 gleich oder ähnlich sind, damit die Geometrie von Siedekühlgefäßen nicht verändert werden muß. Eine solche Flüssigkeit wurde überraschenderweise im "Perfluorisohexen" (dimerem Hexafluorpropen), einem Gemisch von Isomeren (CAS-Nr. 84650-68-0) gefunden, wobei das erfindungsgemäß verwendete Gemisch aus mindestens 80 Masse-% des trans-Isomers besteht und weniger als 3 Masse-% Perfluor-2-methyl-2-penten enthält. Die in dem Gemisch enthaltenen Komponenten haben folgende Strukturformeln:

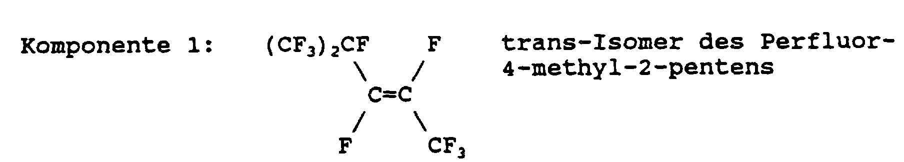

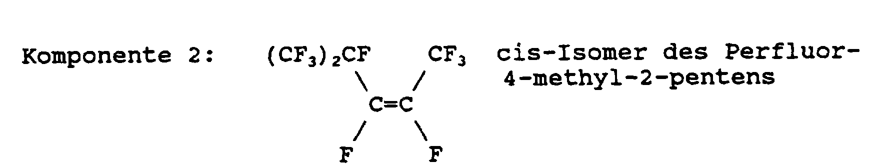

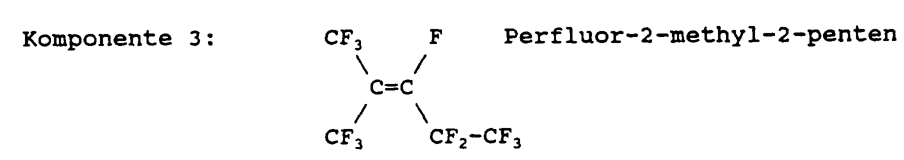

Bevorzugt sind Gemische mit mindestens 88 Masse-%, insbesondere mindestens 90 Masse-% der Komponente 1 und höchstens 2 Masse-%, insbesondere höchstens 1 Masse-%, der Komponente 3.

Ein typisches Isomerengemisch besteht laut GC-Analyse aus 94 bis 95 Flächen-% der Komponente 1, 4,5 bis 5,5 Flächen-% der Komponente 2 und aus 0,2 bis 0,3 Flächen-% der Komponente 3. Alle im folgenden angegebenen Daten sowie mit dieser Flüssigkeit durchgeführten Versuche beziehen sich auf eine solche Zusammensetzung, genannt "Perfluorisohexen".

In der folgenden Tabelle sind die für Kühl- und Isolierflüssigkeiten wichtigsten thermodynamischen und elektrophysikalischen Daten von FCKW 113 sowie von Perfluorisohexen zusammengestellt:

**Tabelle**

| | Maßeinheit | FCKW 113 | Perfluorisohexen |
|---|---|---|---|
| Siedepunkt bzw. -bereich | °C | +47,6 | +45,5 bis 49,5 |
| Kritische Temperatur | °C | +214,1 | +164,5 bis 165,2 |
| Erstarrungspunkt | °C | -35,0 | -89,3 |
| Verdampfungswärme im Siedebereich | kJ/kg | 146,8 | 98,0 |
| Wärmeleitfähigkeit der Flüssigkeit bei +30°C | W/m/K | 0,074 | 0,065 |
| Spezifische Wärme bei +25 °C | kJ/kg/K | 0,96 | 1,13 |
| Kinematische Viskosität bei +20 °C | mm/s | 0,46 | 0,42 |
| Kinematische Viskosität bei -30 °C | mm/s | 0,99 | 0,78 |
| Oberflächenspannung bei +25 °C | mN/m | 19,0 | 11,2 |
| Dielektrizitätszahl bei +23 °C, 1 kHz, 50 % rel. Feuchte | | 2,41 | 1,82 |
| Spez. elektrischer Durchgangswiderstand bei +23 °C und 100 V | Ω · cm | 1,8 · 10¹³ | 2,7 · 10¹³ |
| Dielektrischer Verlustfaktor bei 1 kHz und +23 °C | | 1,0 · 10⁻⁴ | 2,0 · 10⁻³ |
| Durchschlagsspannung bei +20 °C | kV | 55 | 70 |

Vergleicht man die Daten von FCKW 113 mit denen des Perfluorisohexens, kommt man zu folgenen Ergebnissen:
1.Siedebereich von Perfluorisohexen und Siedepunkt von FCKW 113 liegen in der gleichen Größenordnung.
2. Die kritische Temperatur von Perfluorisohexen ist zwar niedriger als die von FCKW 113, liegt aber ebenfalls deutlich oberhalb der maximal zulässigen Kühltemperatur in Siedekühlgefäßen von Bahnantrieben.
3.Der Erstarrungspunkt von Perfluorisohexen ist wesentlich niedriger als der von FCKW 113. Es besteht daher im Gegensatz zu FCKW 113 nicht die Gefahr, daß Perfluorisohexen bei extrem niedrigen Umgebungstemperaturen einfriert.
4. Die Verdampfungswärme im Siedebereich ist zwar bei FCKW 113 höher als bei Perfluorisohexen. Der Massenstrom von Perfluorisohexen ist demnach größer als der von FCKW 113. Da jedoch Siedekühlgefäße keine engen Leitungsquerschnitte haben, können aufgrund des größeren Massenstroms keine Engpässe entstehen.
5. Die Viskosität von FCKW 113 ist besonders bei tiefen Temperaturen höher als bei Perfluorisohexen. Das gleiche gilt für die Oberflächenspannung. Beides ist ausschlaggebend für die Filmdicke der Kondensatschicht an kalten Oberflächen. Sie ist bei Perfluorisohexen geringer als bei FCKW 113. Allerdings ist andererseits die Wärmeleitfähigkeit von FCKW 113 höher als die von Perfluorisohexen. Alle drei physikalischen Kenngrößen beeinflussen die Wärmeübertragung bei der Kondensation. Vor- und Nachteile heben sich etwa auf.
6. Die spezifische Wärme, also die Wärmespeicherfähigkeit, ist bei Perfluorisohexen höher als bei FCKW 113.
7. Die dielektrischen Eigenschaften (Dielektrizitätszahl, spezifischer Durchgangswiderstand und Verlustfaktor) sind bei beiden Flüssigkeiten in der gleichen Größenordnung, das heißt für die elektrische Isolierung von Bahnantrieben ausreichend.
8.Die Durchschlagsspannung von Perfluorisohexen ist höher als die von FCKW 113.

Aus den Vergleichen geht hervor, daß Perfluorisohexen hinsichtlich Siedebereich, kritischer Temperatur und Wärmeübertragung bei der Kondensation sowie hinsichtlich dielektrischer Eigenschaften FCKW 113 gleichzusetzen ist, hinsichtlich Erstarrungspunkt, Wärmespeicherfähigkeit und Durchschlagsspannung FCWK 113 überlegen ist. Lediglich der Massenstrom ist bei FCKW 113 geringer als bei Perfluorisohexen, was bei der Geometrie der einzusetzenden Kühl- und Isolierapparaturen zu berücksichtigen ist. Das ist beim Einsatz von Perfluorisohexen in Siedekühlgefäßen nicht notwendig, weil hier keine engen Leitungsquerschnitte vorliegen.

Das Perfluorisohexen ist thermisch stabil, ebenso bei Spannungsüberschlägen. Wie bei allen Perfluoralkanen und -alkenen können durch thermische Belastung und Funkenüberschläge geringe Mengen an Perfluorisobuten, einem toxischen Gas, entstehen. Es wurde aber überraschenderweise festgestellt, daß bei thermischer und/oder elektrischer Belastung des Perfluorisohexens Perfluorisobuten in Anwesenheit bestimmter Metalle rascher abgebaut wird als bei vergleichbaren Perfluoralkanen.

Gegenüber Werkstoffen verhält sich das Perfluorisohexen ähnlich inert wie FCKW 113.

Das Perfluorisohexen ist hinsichtlich akuter oraler Toxizität, Fisch- und Bakterientoxizität, Haut- und Augenreizung weder gesundheitsschädlich noch reizend. Es ist außerdem nicht mutagen (Ames-Test). Nur bei Inhalation der Dämpfe können Gesundheitsschäden auftreten. Da jedoch die erfindungsgemäße Anwendung nur in geschlossenen Systemen erfolgt, besteht lediglich dann die Gefahr einer Gesundheitsschädigung durch Einatmen, wenn aus Lecks der geschlossenen Apparaturen größere Mengen an Perfluorisohexen-Dämpfen austreten.

Perfluorisohexen läßt sich nach dem Verfahren der US-A 2 918 501 herstellen und destillativ zu einem Gemisch von 98 % an Komponente 1 und 2 % an Komponente 3 aufarbeiten. Vorteilhafter ist aber das Verfahren, das in der deutschen Patentanmeldung P 42 28 592.5 (HOE 92/F 917) vorgeschlagen wurde. Diese Anmeldung betrifft ein Verfahren zur Herstellung von Dimeren des Hexafluorpropens mit einem hohen Anteil an Perfluor-4-methyl-2-penten und einem niedrigen Gehalt an Perfluor-2-methyl-2-penten, das dadurch gekennzeichnet ist, daß die Dimerisierung des Hexafluorpropens in einem aprotischen Lösemittel in Gegenwart eines Adduktes aus einem Amin, welches keine NH-Gruppe enthält, und einem Metallfluorid erfolgt. Vorzugsweise wird ein Amin eingesetzt, das pro Stickstoff drei Alkyl- oder Alkylengruppen aufweist, die Ethersauerstoffatome enthalten können, oder es werden Diamine oder Triamine für das Addukt eingesetzt. Das aprotische Lösemittel ist bevorzugt Acetonitril und das Metallfluorid bevorzugt Kaliumfluorid. Man erhält so Perfluorisohexen mit einem hohen Reinheitsgrad (mindestens 99 % des Isomerengemisches). Es ist frei.von störenden Verunreinigungen wie Wasser, die die elektrischen Isolations- und Festigkeitswerte nachteilig beeinflussen können. Flußsäure- und Fluoridgehalt liegen unter 1 µg/g.

Da nicht kondensierbare Gase - in erster Linie Luft - die Durchschlagsspannung verändern können, auf jeden Fall aber den Wärmeübergang und damit die Leistungsfähigkeit eines Wärmeübertragungssystems erheblich herabsetzen, sollten solche Gase aus einer Kühl- und Isolierflüssigkeit möglichst entfernt werden. Bei dem vorgeschlagenen Verfahren ist es möglich, den Gehalt an nicht kondensierbaren Gasen auf maximal 1000 ppm (v/v) zu reduzieren.

Das Perfluorisohexen ist ein "Altstoff" und unter der EINECS-Nr. 283-527-0 registriert.

Das Perfluorisohexen ist wie FCKW 113 unbrennbar und hat somit gegenüber den Ölen und Glykolen, die ebenfalls als FCKW-Substitute eingesetzt werden, sicherheitstechnische Vorteile. Seine Zündtemperatur ist mit 420 °C so hoch, daß sie bei den üblichen Anwendungstemperaturen nicht zu einer Gefahr werden kann.

Das Perfluorisohexen ist eine reine Fluor-Kohlenstoff-Verbindung, ist also im Gegensatz zu FCKW 113 chlorfrei und beeinflußt somit die Ozonschicht in der Stratosphäre nicht. Sein Ozonabbaupotential (ODP) ist gleich Null. Wegen seiner relativ reaktiven Doppelbindung ist seine Lebensdauer in der Atmosphäre geringer als die der gesättigten Perfluoralkane, die ebenfalls als FCKW-113-Substitute in Frage kommen. Wegen seiner geringen akuten Säugetier-(oral), Bakterien- und Fischtoxizität, jedoch schlechten biologischen Abbaubarkeit, ist das Perfluorisohexen als nur schwach wassergefährdend einzustufen.

Gemessen an den Anforderungen, die an ein Kühl- und Isoliermedium gestellt werden müssen und die vorstehend detailliert dargestellt wurden, ist Perfluorisohexen für diesen Einsatzzweck sehr gut geeignet. Es eignet sich sowohl als Medium für die einphasige Wärmeübertragung als auch für die Kühlung mit zweiphasiger Konvektion, zum Beispiel für die Siedekühlung oder für die Anwendung im Wärmerohr. Außerdem besitzt es gute elektrisch isolierende Eigenschaften. Es ist thermisch stabil, materialverträglich, hat ein ausreichend günstiges physiologisches Verhalten, ist unbrennbar und relativ umweltverträglich.

Es wurde weiterhin gefunden, daß das Perfluorisohexen mit einer geringeren Menge einer hochfluorierten Verbindung aus der Gruppe a) der Alkane mit mindestens 3 Kohlenstoffatomen, b) der Dialkylether oder c) Mischungen solcher Alkane und solcher Ether vermischt werden kann. Bevorzugt sind Mischungen mit mindestens 60, insbesondere mindestens 70 Gew.-% Perfluorisohexen und insbesondere azeotrope Mischungen.

Bevorzugte hochfluorierte Alkane haben die Formel

CₙF₂ₙ₊₂₋ₐHₐ

in der n 3 bis 6, vorzugsweise 4 bis 6, und a 1 bis (n + 1) bedeuten.

Bevorzugte hochfluorierte Dialkylether haben die Formel

CₘF_{2m+1-b}H_{b}-O-CₚF_{2p+1-c}H_{c}

in der, unabhängig voneinander, m und p 1 bis 4 bedeuten, wobei (m + p) nicht mehr als 5 sind, und (b + c) 1 bis (m + p + 1) bedeutet.

Es können auch brennbare Mischungskomponenten eingesetzt werden, vorausgesetzt, daß die resultierende Mischung nicht brennbar bleibt.

Die Erfindung wird durch folgende Beispiele näher erläutert.

### Beispiel 1

Es wurde die Kühlleistung von potentiellen FCKW-113-Substituten in einem Siedekühlgefäß für Bahnantriebe gemessen und mit der von FCKW 113 verglichen. Folgende Flüssigkeiten wurden geprüft:
1.Perfluorisohexen,
2. Perfluor-2-methylpentan, ein Isomer des Perfluorhexans,
3.ein Gemisch aus n-Perfluorhexan (Hauptkomponente), Perfluor-2-methylpentan und Perfluor-3-methylpentan.

Das Siedekühlgefäß bestand aus einem Behälter mit einem aufgesetzten Kältemittelkondensator und einem Deckel. Die zu kühlenden elektrischen Bauteile - in diesem Fall Dioden - wurden auf eine Tragkonstruktion aufmontiert, die in den Behälter eingesetzt und mit diesem verschraubt wurde. Die Dioden waren in der betreffenden Flüssigkeit vollständig eingetaucht. Als Kühlleistung wurde die Wattzahl der Diodenleistung gemessen. Sie war bei der Flüssigkeit Nr. 1, also dem Perfluorisohexen, genauso hoch wie bei FCKW 113, bei der Flüssigkeit Nr. 2 um 18 % und bei der Flüssigkeit Nr. 3 um 16 % niedriger.

### Beispiel 2

Zur Prüfung der thermischen Stabilität des Perfluorisohexens wurde diese Flüssigkeit in einer zugeschmolzenen Glasampulle 1000 Stunden bei 100 °C gelagert. Zum Vergleich wurde der gleiche Versuch mit der Perfluor-2-methylpentan (Flüssigkeit Nr. 2 aus Beispiel 1) durchgeführt. In beiden Flüssigkeiten entstanden während der Untersuchung in der Gasphase sehr geringe Mengen an Perfluorisobuten, einem toxischen Gas, und zwar im Perfluorisohexen 0,3 ppm (v/v) und im Perfluor-2-methylpentan 24 ppb (v/v). Ansonsten blieben beide Flüssigkeiten unverändert.

### Beispiel 3

Perfluorisohexen wurde in einer zugeschmolzenen Glasampulle 100 Stunden bei 300 °C in reiner Form und unter Zusatz von Metallstreifen (Edelstähle mit den Stahlschlüsseln 1.4551 und 1.4571, Nickel, Zink, Kupfer, Aluminium) gelagert. Bei diesen Versuchen stellte sich überraschenderweise heraus, daß sich in der Probe mit Metall zusätzen 83 % weniger Perfluorisobuten als in der Probe mit reinem Perfluorisohexen gebildet hatte. Im reinen Perfluorisohexen hatten sich 4 % des trans-Isomers in das cis-Isomer umgewandelt. Der Anteil an Perfluor-2-methylpenten blieb unverändert. Bei der Probe mit Metallzusätzen betrug die trans-cis-Umisomerisierung 1 %. Der Anteil an Perfluor-2-methylpenten stieg auf 0,3 %.

### Beispiel 4

Perfluorisohexen sowie das in Beispiel 1 und 2 erwahnte Perfluorisohexan wurden in getrennte Behälter eingefüllt und die Behälter verschlossen. In der Flüssigphase befand sich jeweils ein Kupferdraht, der drei Minuten lang auf Rotglut (circa 490 °C) erhitzt wurde. Dabei entstand überraschenderweise im Perfluorisohexen weniger Perfluorisobuten als im Perfluorisohexan. Offensichtlich haben die Metalle (Kupfer des Drahtes, Aluminium und Edelstahl des Behälters) eine katalytische Wirkung auf die Zersetzung des Perfluorisobutens, was bei Perfluorisohexen stärker in Erscheinung trat als beim Perfluorisohexan. Ansonsten blieben beide Flüssigkeiten unverändert.

### Beispiel 5

Perfluorisohexen wurde in einem Temperaturbereich zwischen -40 °C und +40 °C 54 Spannungsüberschlägen ausgesetzt. Es entstand weniger als 1 ppm (v/v) Perfluorisobuten. Es fand keine Umisomerisierung statt.

### Beispiel 6

Verschiedene Metalle und Kunststoffe wurden in der Flüssig und Dampfphase von Perfluorisohexen fünf Tage je 8 Stunden beim Siedepunkt gelagert. Folgende Werkstoffe veränderten sich weder im Gewicht noch im Aussehen: Aluminium, Edelstähle mit den Stahlschlüsseln 1.4551 und 1.4571, Kupfer, Schwarzblech, Weißblech, Polyacetalharz als glasfaserverstärkter Spritzgußtyp mit der Handelsbezeichnung ®Hostaform C9021GV, Polyphenylensulfide mit den Handelsbezeichnungen ®Fortron 6165 A4 natur und 1140 L4 natur, Polyethylen, hochmolekularer Blastyp mit der Handelsbezeichnung ®Hostalen GM 7746, Polyvinylchlorid mit der Handelsbezeichnung ®Hostalit Z, aromatische Co-Polyester mit den Handelsbezeichnungen ®Vectra A 130, C 130 (beide glasfaserverstärkt), A 530 (mineralmodifiziert), A 625 (graphitmodifiziert), C 810 (metallisierbar, mineral- und glasfasermodifiziert) und C 150 (glasfaserverstärkt), Polypropylentypen mit den Handelsbezeichnungen ®Hostalen PPX 4207 (statistisches Copolymer), PPW 1752 (Blockcopolymer mit Ethylen-, Propylen- und Kautschukeinlagerungen) und PPN 1060 (isotaktisches Polypropylen).

### Beispiel 7

Zur Entfernung nicht kondensierbarer Gase wurde Perfluorisohexen in einen heizbaren Behälter mit Motorrührer und Thermometer gefüllt. Nachdem das obere Einfüllventil geschlossen worden war, wurde das eingefüllte Perfluorisohexen unter Rühren bis zum Siedepunkt erhitzt. Aufsteigende Dämpfe des Perfluorisohexens wurden in zwei Wärmetauschern oberhalb des Behälters kondensiert. Das Kondensat floß in den Behälter zurück. Nicht kondensierte Perfluorisohexen-Dämpfe wurden in einem Silicageltrockner oberhalb der Wärmetauscher wasserdampffrei gemacht und in einem Aktivkohlefilter oberhalb des Trockners absorbiert. Nach Erreichen des Siedepunktes wurde das heiße Perfluorisohexen durch ein unteres Ablaßventil abgelassen, über einen zusätzlichen Wärmetauscher gekühlt und in eine evakuierte Stahlflasche gefüllt. Der Gehalt an nicht kondensierbaren Gasen wurde auf diese Weise auf maximal 1000 ppm (v/v) reduziert.

Anstelle des reinen Perfluorisohexens können die folgenden Mischungen von Perfluorisohexen und hochfluorierten Ethern eingesetzt werden:

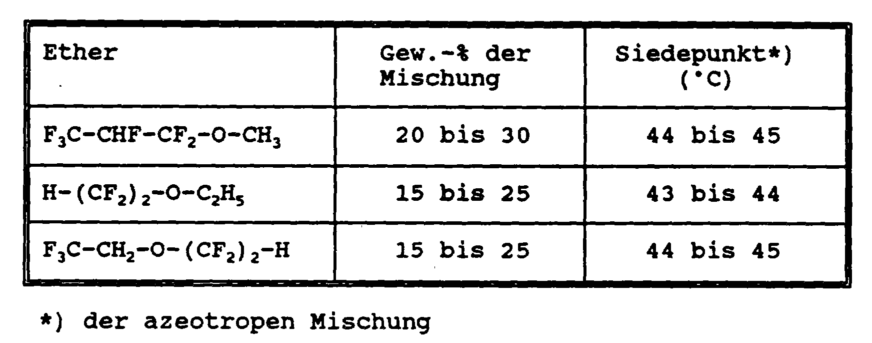

## Patentansprüche

1. Verwendung einer Mischung, die mindestens 80 Masse-% des trans-Isomers des Perfluor-4-methyl-2-pentens und weniger als 3 Masse-% Perfluor-2-methyl-2-penten enthält, als Wärmeträger, Kühl- und Isoliermedium.

2. Verwendung einer Mischung nach Anspruch 1, die zusätzlich eine weitgehend fluorierte Verbindung aus der Reihe der Alkane mit mindestens 3 Kohlenstoffatomen und/oder Dialkylether enthält, wobei die gesamte Mischung nicht brennbar ist.

3. Verwendung der Mischung nach Anspruch 1 oder 2 für die zweiphasige Siedekühlung von elektrischen und elektronischen Bauelementen.

4. Verwendung der Mischung nach Anspruch 1 oder 2 als Kühlmedium für die zweiphasige Siedekühlung von Gasen oder Flüssigkeiten ohne Hochspannungsisolation, vorzugsweise in einem Wärmerohr.

5. Verwendung der Mischung nach Anspruch 1 oder 2 als Wärmeträgermedium, wobei die Wärmeenergie durch einphasige Konvektion von dem zu kühlenden gasförmigen, flüssigen oder festen Stoff zu einem anderen zu erwärmenden gasförmigen, flüssigen oder festen Stoff geführt wird.

## Claims

1. Use of a mixture, which contains at least 80 % by weight of the trans isomer of perfluoro-4-methyl-2-pentene and less than 3 % by weight of perfluoro-2-methyl-2-pentene, as a heat transfer medium, cooling and insulating medium.

2. Use of a mixture according to claim 1, which additionally contains a highly fluorinated compound from the group of alkanes with at least 3 carbon atoms and/or dialkyl ether, the complete mixture being non-flammable.

3. Use of the mixture as claimed in claim 1 or 2 for two-phase boiling cooling of electric and electronic components.

4. Use of the mixture as claimed in claim 1 or 2 as a cooling medium for two-phase boiling cooling of gases or liquids without high-voltage insulation, preferably in a heat pipe.

5. Use of the mixture as claimed in claim 1 or 2 as a heat transfer medium, the heat energy being transferred, by means of single-phase convection, from the gaseous, liquid or solid substance to be cooled to another gaseous, liquid or solid substance to be heated.

## Revendications

1. Utilisation d'un mélange, qui contient au moins 80 % en masse de l'isomère trans du perfluoro-4-méthyl-2-pentène et moins de 3 % en masse de perfluoro-2-méthyl-2-pentène, en tant qu'agent caloporteur, milieu réfrigérant et isolant.

2. Utilisation d'un mélange selon la revendication 1, qui contient en plus un composé largement fluoré de la série des alcanes ayant au mois trois atomes de carbone et/ou des dialkylether, le mélange total n'étant pas inflammable.

3. Utilisation du mélange selon la revendication 1 ou 2 pour une refroidissement par vaporisation biphasique de composants électriques et électroniques.

4. Utilisation du mélange selon la revendication 1 ou 2 en tant milieu réfrigérant pour une refroidissement par vaporisation biphasique de gaz ou de liquides sans isolation de haute tension, de préférence dans un tube échangeur de chaleur.

5. Utilisation du mélange selon la revendication 1 ou 2 en tant que milieu caloporteur, l'énergie calorifique étant transférée par une convection monophasique de la substance solide, liquide ou sous forme gazeuse à refroidir vers une autre substance solide, liquide ou sous forme gazeuse à chauffer.
